# EUROPEAN PATENT APPLICATION

(11) **EP 4 506 045 A1**
(43) Date of publication of application: **12.02.2025**
(21) Application number: 24188867.6
(22) Date of filing: 16.07.2024
(51) Int. Cl.: A63F 13/26, A63F 13/53, A63F 13/25, A63F 13/67, G06F 11/00

(54) **IMAGE BASED PROGRAM STATE ANALYSIS SYSTEM AND METHOD**

(30) Priority: 09.08.2023 GB 202312202
(71) Applicant: Sony Interactive Entertainment Inc., Tokyo 108-0075 (JP)
(72) Inventor: BRISLIN, Simon, London, W1F 7LP (GB); RYAN, Nicholas, London, W1F 7LP (GB)
(74) Representative: D Young & Co LLP

(57) **Abstract**

An image-based program state analysis method comprises the steps of, for a given image generated by a program, identifying at least a first location within the image occupied by a respective user interface element; identifying in the image a predetermined point on the respective user interface element; identifying the information conveyed by the respective user interface element, with reference to the predetermined point; and outputting the information for subsequent analysis.

## Description

### FIELD OF THE INVENTION

The present invention relates to an image-based program state analysis system and method.

### BACKGROUND

It is often desirable for the developer or publisher of a game, or a platform administrator for a videogame platform upon which the game is played, to obtain telemetry about gameplay in order to identify potential bugs, issues with the game, player behaviour and interaction within the game, and any unexpected or unknown aspects to playing the game that may only come to light when played by a statistically significant number of people. To this end, many modern games provide such telemetry back to at least one of the developer, publisher, and platform administrator, but unfortunately this is not true of all games, and so an alternative approach is desirable where telemetry, or sufficient telemetry, is not available to a party who desires it.

The present invention seeks to address or mitigate this problem.

### SUMMARY OF THE INVENTION

Various aspects and features of the present invention are defined in the appended claims and within the text of the accompanying description.

In a first aspect, an image-based program state analysis method is provided in accordance with claim 1.

In another aspect, an image-based program state analysis system is provided in accordance with claim 15.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Figure 1 is a schematic diagram of an entertainment device in accordance with embodiments of the description.
- Figure 2 is a schematic diagram of an image generated by a program that comprises a plurality of respective user interface elements in a so-called heads up display 'HUD' arrangement, in accordance with embodiments of the description.
- Figure 3 is a flow diagram of an image-based program state analysis method, in accordance with embodiments of the description.

### DESCRIPTION OF THE EMBODIMENTS

An image-based program state analysis system and method are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

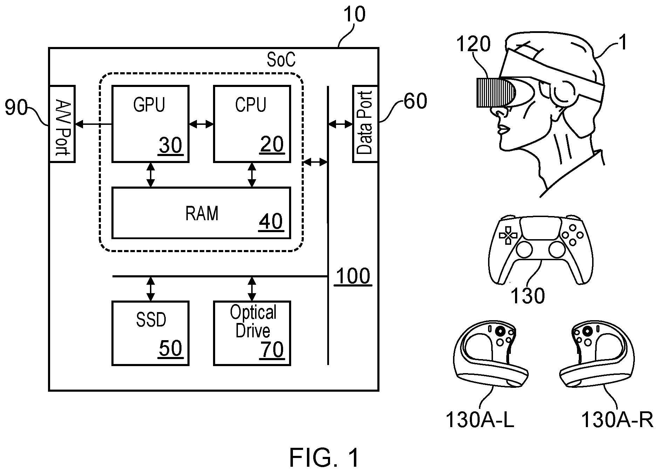

Referring now to the drawings, wherein like reference numerals designate identical or corresponding parts throughout the several views, Figure 1 shows an example of an entertainment system 10, in this case a computer or console such as the Sony^{®} PlayStation 5^{®} (PS5).

The image-based program state analysis system may be embodied within such an entertainment system 10, or equivalently and image-based program state analysis method may be carried out by such an entertainment system 10, for example under suitable software instruction.

The entertainment system 10 comprises a central processor 20. This may be a single or multi core processor, for example comprising eight cores as in the PS5. The entertainment system also comprises a graphical processing unit or GPU 30. The GPU can be physically separate to the CPU, or integrated with the CPU as a system on a chip (SoC) as in the PS5.

The entertainment device also comprises RAM 40, and may either have separate RAM for each of the CPU and GPU, or shared RAM as in the PS5. The or each RAM can be physically separate, or integrated as part of an SoC as in the PS5. Further storage is provided by a disk 50, either as an external or internal hard drive, or as an external solid state drive, or an internal solid state drive as in the PS5.

The entertainment device may transmit or receive data via one or more data ports 60, such as a USB port, Ethernet^{®} port, Wi-Fi^{®} port, Bluetooth^{®} port or similar, as appropriate. It may also optionally receive data via an optical drive 70.

Audio/visual outputs from the entertainment device are typically provided through one or more A/V ports 90, or through one or more of the wired or wireless data ports 60.

An example of a device for displaying images output by the entertainment system is a head mounted display 'HMD' 120, such as the PlayStation VR 2 'PSVR2', worn by a user 1.

Where components are not integrated, they may be connected as appropriate either by a dedicated data link or via a bus 100.

Interaction with the system is typically provided using one or more handheld controllers (130, 130A), such as the DualSense^{®} controller (130) in the case of the PS5, and/or one or more VR controllers (130A-L,R) in the case of the HMD.

### Heads-up displays

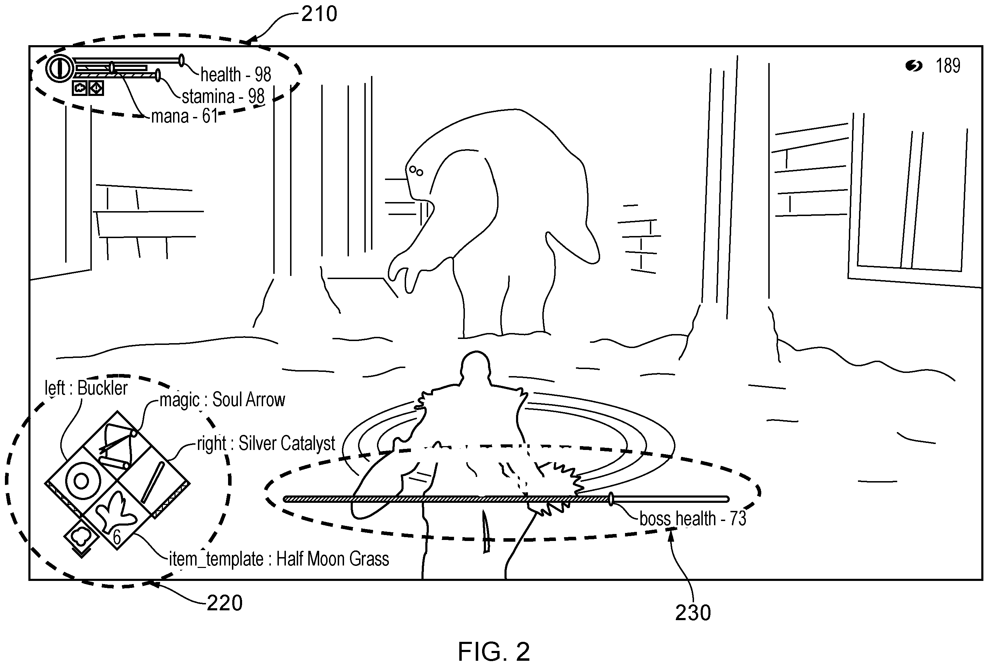

Referring now to figure 2, a typical videogame comprises visual feedback in the form of a heads up display or 'HUD' that overlays the in game action. The visual feedback is typically intended to provide the user with moment to moment information about various aspects of the game such as the player's in-game health or stamina (for example in HUD section 210 in figure 2), their equipped or accessible inventory items (for example in HUD section 220 in figure 2), and any other in-game information such as for example the health of an opponent (for example in HUD section 230 in figure 2).

In a first embodiment of the description, these HUD sections occupy fixed positions on screen, although optionally some HUD sections are in addition conditional/temporary (for example HUD section 230, which only appears when there is an opponent with an associated health bar).

Because different games have different HUDs, in embodiments of the description, a game-specific HUD configuration file is associated with a respective game that serves to define what HUD elements within the game are relevant for the purposes of image-based program state analysis. This configuration file may be generated by the game's developer or publisher, or by the platform administrator or another third party.

The configuration file may define the on-screen region occupied by an HUD element, and optionally a root position or anchor that defines the start point of the HUD element. Typically the start point corresponds to 0% on a bar or other representation of a continuous variable in the HUD, or a fixed point from which to extract image data in the region for comparison with the appearance of reference image data, or in which to start an optical character recognition process. The region and/or position may be defined in a resolution-independent manner, for example as a percentage of the distance from a reference corner of the screen in each direction. Alternatively or in addition if at least some part of the HUD is laid out differently for different respective resolutions, then different regions and/or positions may be provided for different resolutions.

Optionally the configuration file may also define the type of HUD element so as to inform the type of data extraction appropriate; for example it may define bar-type elements, image type elements, numerical character elements, and alphanumeric character elements. The configuration file may also define whether the hard element is conditional/temporary or permanent.

### Bar-type elements

For bar-type elements, based upon the defined region and/or the defined appearance of the bar within that region, and also the start point for the bar-type element, the analysis system can evaluate the current image to determine how much of the maximum bar is currently illustrated in-game, and hence what percentage or equivalent value is currently being represented by the bar on-screen. In figure 2, three bars are illustrated in HUD section 210. In this case, the health bar is read as being 98% full; a mana bar (mana typically being a magical charge) is read as being 61% full, and a stamina bar is read as being 98% full.

Notably, the health bar and stamina bar both read as 98% full but are different physical lengths, because the maximum length of the respective bars is different.

In the case of games where the default length of such a bar can be extended (for example extending maximum health to 120%), then in principle the region comprising the health bar may be defined to accommodate the maximum extended health bar, and the analysis system reads the percentage up to the maximum extended percentage. Alternatively or in addition, if the region comprising the health bar goes up to 100%, but in game the health bar can be extended to 120%, then the analysis system may detect when the health bar extends beyond the default region, and extrapolate the value accordingly.

It will be appreciated that in some games, the length of the bar remains the same but a colour component within the bar changes; for example at 100% the bar is completely green, whereas at 75% health three quarters of the bar is green and the final quarter of the bar is red. This can be considered to be essentially the same scenario; the length of the green bar is what is assessed. In both cases the colour of the rest of the region, whether it is red or part of the virtual environment, is less relevant than the colour of the bar. Finally in those cases where the bar also changes colour as a function of health as the bar grows or shrinks, typically the game will ensure that the bar is visible and hence will either place it within a high contrast boundary (which in turn can be used to define the region for analysis), or distinguishes over the background environment for example through luminance.

Optionally the image may be analysed within a luminance channel or other greyscale representation if appropriate to the game; this may also be an option indicated within the configuration file.

In any event, the image analysis system can perform image analysis by detecting the brightness and/or colour of pixels at the start point of the bar, and measure how far similar pixels extend along the bar to measure the current extent of the bar, and from this in conjunction with the maximum extent of the bar, calculate a current value being represented by it. Alternatively or in addition, the configuration file can specify the brightness and/or colour of pixels expected in the bar, thereby either enabling confirmation of the start point, or avoiding the need to identify the expected colour of the remainder of the bar.

In a variation of the bar, discreet elements such as heart icons or the like may be shown indicating for example the number of hits a character can take before dying. In this case, the configuration file may indicate the presence of a discrete bar and the relative spacing of discrete elements. The image analysis system may then detect the presence or absence of the icons at the spaces to determine the effective extent of the bar in a similar manner to that described above.

Hence more generally the image analysis system performs image analysis to detect how much of a maximum bar located at a defined position is currently depicted on screen, and from this estimates a value for the in-game property represented by that bar.

### Image-type elements

Alternatively or in addition to the other elements described herein, a HUD may comprise image elements. Typically but not exclusively, these relate to equipped inventory items and/or equipped spells or other capabilities.

Notably, the image elements currently displayed may represent only a small proportion of the number of image elements that might be displayed; for example a player may have several dozen or hundred items they could equip, but the HUD only shows, as a non-limiting example, four equipment slots.

Hence in this case, the image analysis system may extract or isolate an image of an item from a respective equipment slot and compare it against the possible items that can be equipped to detect what the user has currently got equipped. This may be performed for example as a template match.

To make this process efficient, the image analysis system may subsample or otherwise reduce the image extracted from the equivalent slot to a small image, and/or generate a perceptual hash or other direct or indirect representation of the image for the purposes of efficient comparison with equivalent representations of reference items.

Once a match (or a sufficiently close match within a tolerance threshold) has been found, then the image analysis system obtains the item definition associated with the matching reference item.

The representations of the reference items may be associated with the configuration file. Alternatively or in addition, they may be stored centrally for example as a server of the platform administrator, the developer, and/or the publisher, and the representation of the image is uploaded to the server as a query, and the item definition associated with a matching reference item is returned as the response. Hence in this case the image is identified at the central server.

It will be appreciated that some image elements may represent one of a large number of alternatives (as in the case of equipped items), and so many more efficient to query a central repository of reference items, whilst other in the image elements may represent one of a small number of alternatives (for example in the case of a pictorial representation of the user's in game health, or a representation of progress through a goal, for example in the form of accumulating pieces of a key or other item), and so optionally representations of some reference items may be stored locally whilst representations of others are stored centrally. In this case, typically the configuration file will indicate where the representations of the reference items are stored.

In any event, optionally the image analysis system reviews the or each equipment slot periodically, and only attempts to identify the image in the equipment slot if that image appears to change, or changes by more than a threshold amount and/or for a threshold period.

In the event that inventory items are displayed against a transparent background (so that the image within the equipment slot varies continuously due to changes in the background), then assuming that the equipped items do not change at the same frequency as changes to the background, the invariant components of the equipment slot image (i.e. corresponding to the actual item itself) can be identified, and changes relative to this invariant component can be detected (and optionally a representation of just the invariant component can be used for comparison with representations of reference items).

It will be appreciated that the references to 'equipment slots' are exemplary only and merely illustrate the notion of a defined region within which an image-type element may be found within the HUD.

Hence more generally the image analysis system performs image analysis to identify an image element within a defined region of the HUD by comparing a representation of the image type element to a corresponding representation of a plurality of reference image elements, and obtaining an item definition associated with the best matching reference item (where best may further require an exact match, a match within a tolerance threshold, or simply the best match).

### Numerical character elements

Alternatively or in addition to the other elements described herein, a HUD may comprise numerical character elements - e.g. the characters 0-9, and optionally some common number dividers such as a decimal point (.), comma (,), devisor (/), or ratio (:), and similarly optionally some common measurements such as seconds (s), metres (m), percent (%), revs per minute (rpm), or the like.

Typically (but not always) for numerical character elements, their positioning is fixed, either with hundreds, tens, and units (and any other number placements) being assigned fixed positions, or the numbers counting up from a starting position.

Hence in either case the configuration file may identify a start point for the numerical character elements, and optionally each element may be identified separately, or the total number may be identified (although in practice the recognition process may be similar for both instances).

Each numerical character element may be identified using optical character recognition for the individual or collective region occupied by the or each character element. Typically, the configuration file will identify what the numerical character elements represent (for example time or distance), and so will not be necessary to identify associated measurements within the HUD itself. However, this is also an option.

The configuration file may comprise data relating to a particular font to use for optical character recognition (for example providing template numerical character elements, or a configured recognition engine such as previously trained weights for a machine learning algorithm or hidden Markov model). Typically however for numerical character elements, as the number of characters is small and they are individually highly distinctive from each other, a font specific modification may not be necessary.

Optionally the configuration file can indicate where HUD elements cross-reference each other; for example if the player's health is represented both by a bar type element and numerical character elements, then either one of these elements can be omitted from detection as redundant, or both can be detected and used to cross validate each other. More generally, and HUD element may simply indicate that the numerical values are likely to have changed, and possibly the direction of change; for example if and HUD element indicates damage has been taken, then it is likely that a numerical representation of health will go down rather than up, and this can be used to validate the OCR result.

Hence more generally the image analysis system performs image analysis to identify one or more numerical character elements within a defined region of the HUD (or equivalently starting at a defined start point on the HUD) using optical character recognition.

Whilst numbers may have fixed positioning, as described above, this is not always the case and so optionally numbers (including only numbers) may be treated similarly to more general alphanumeric character elements, as described below.

### Alphanumeric character elements

Alternatively or in addition to the other elements described herein, a HUD may comprise alphanumeric character elements - e.g. letters and optionally numbers, and optionally also some punctuation marks such as full stops, commas, question marks, exclamation marks, and the like.

The process of recognising these is largely similar to that for numerical character elements as described elsewhere herein, and may also optionally include modification data for specific fonts as described elsewhere herein.

Typically for alphanumeric character elements however their positioning depends upon the so-called justification of the text; this may align to the left of a predetermined region, the right (particularly for some languages that read right to left) the top (particularly for some languages that read vertically) or centrally, which may be particularly common for annotations of in game items so that they align with an associated depiction of the item or an associated bar type element or the like.

By contrast with numeric character elements, alphanumeric character elements are more likely to be part of variable length text and so the overall region in which these characters may be found is likely to be larger but not completely filled. In this sense, a strategy similar to the bar type elements (or discrete bar type elements) may be considered, based upon progressing from a start point.

Hence for left, right, top, or bottom justified text, the start point for OCR can be at the associated left, right, top, or bottom of the predetermined region, and then progress according to the expected reading direction. Meanwhile for centrally justified text, a start point can be central within the predetermined region (or the expected first-line thereof), and OCR can be used to determine the extent of the text at least to the left (for left to right reading text, or right for right to left leading text, etc), and once the start point has been identified then the OCR can be used to read the text. Text that has already been read in the process of determining the start point need not be re-read if it appears to be valid, as described below.

Alternatively, the OCR can start at the relevant edge of the overall region appropriate to the current language, and proceed to search until a first character or word is identified and then read on.

In either case for centrally justified text, an assumed symmetry of text length at least to within a threshold tolerance can optionally help to remove any false positives when searching for alphanumeric characters.

OCR typically identifies individual characters, but may then refine this identification, or re-identify at a world level, based on whether combined characters correspond to a dictionary word or (in text that may not only include dictionary words such as in a game) to text that follows expected construction phonetically and/or according to common doublets or triplets of letters. Optionally, in a similar manner to the image type elements described elsewhere herein, the configuration file may include a dictionary or glossary of words expected to be found within some or all of the game.

In some cases, only keywords within a text may be relevant, such as for example the name of a character. What the characters says, if anything, may optionally not be considered important. Alternatively or in addition other key terms such as particular quest items may also be considered relevant and so where these are mentioned by a character multiple relevancies may appear in a single block of text. What is relevant in this context is described elsewhere herein.

Hence more generally the image analysis system performs image analysis to identify one or more alphanumeric character elements in a defined region of the HUD, optionally adopting a search strategy responsive to the expected text justification within that region.

### Other elements

The examples of bar type elements, image type elements, numeric character elements, and alphanumeric character elements are non-limiting examples, and any type of HUD element may be considered. For example, the colour of an HUD element may change to indicate an event such as the player's character being hit. In this case, one or more sample pixels of the relevant HUD element can be tracked to detect the relevant colour change, and the configuration file can identify the pixels or associated region from which to conduct this sampling. Other HUD elements will be apparent to the skilled person.

### Conditional/temporary elements.

As noted elsewhere herein typically HUD elements are static and permanent (even if the contents vary). However, there are some HUD elements that are temporary and/or conditional. Referring again to figure 2, a common example is a health bar for a boss enemy, which only appears when the user and the boss engage in a fight in figure 2, alphanumeric text identifying the name of the boss is also provided, and so in this case is also an example of a temporary and/or conditional HUD element.

Other examples include extra HUD elements that are added when the user acquires or equips a new skill or equipment, and may subsequently be permanent or disappear when the user on equips the skill or equipment (or in some cases the game removes the skill or equipment).

Another example is when the game comprises multiple playable characters, who may have different hard elements associated with them for example for the reasons given above relating to different skills or equipment and so result of the change in the HUD when a user chooses between them.

In these cases, the image analysis system may period of the check for a characteristic aspect of the HUD element in the expected position (for example, looking for green or the relevant colour at the start point of a boss health bar, or if the health bars are variable and position centrally, then looking for green at the centre point of a boss health bar, on the assumption that a boss starts with full health). Optionally to avoid false positives, then like the image type element, image data for a sub-region of the HUD may be compared against a reference image of the HUD to identify the presence or absence of an HUD element; hence for example where a health bar appears and is green with a white border above and below, then a sub-region of the image expected to incorporate this image pattern when the hunt element is present can be compared against a reference image of this image pattern to detect whether the hut element is present; this is likely to avoid false positives that may be cause for example by the player running over grass, which may be green, but is unlikely to generate the specific green-with-white-border-above-and-below associated with the HUD element itself. Where the HUD element is only numeric or alphanumeric text, then OCR may be used within the expected region for example in a sub-region one or two characters wide simply to detect whether any text is currently present.

Once the HUD element has been detected, then it may be evaluated using the relevant technique described elsewhere herein.

The subsequent disappearance of the hard, if that occurs, may be indicated by a failure of the image analysis system to determine a value (or an expected or valid value); for such temporary staff conditional HUD elements, this can be interpreted as the disappearance of the element, in which case the system can revert to detecting its reappearance.

In the sense that all HUD elements are temporary or conditional on the game running (or the game environment in which the HUD is displayed running), then the disappearance of all the HUD elements at substantially the same time can be indicative of the game either switching state (for example to a menu or other user interface) or the game being turned off.

Hence more generally for temporary/conditional HUD elements, the image analysis system performs image analysis to detect the presence of the HUD element prior to performing one of the other identification strategies described elsewhere herein, and separately for these elements interprets a failure to identify an expected/valid value as indicative of the HUD element disappearing again. Meanwhile separately, optionally if all or a threshold number of HUD elements disappear at substantially the same time, this can be indicative of a change in the mode of play or use of the game.

### Frequency of analysis

Different elements of the HUD may be evaluated at different periodicities. For example, changes in health can be indicative of sudden events, and so it may be preferable to track health on a frame by frame basis or every few frames so that its status is monitored at a high frequency. Since health is generally depicted by a health bar, which is straightforward to detect and evaluate, this has a relatively low computational overhead

By contrast the relatively more computationally expensive process identifying image type elements may be performed with a slower periodicity such as every 1, 10, or 60 seconds, and/or as noted elsewhere herein conditionally, based on whether a change, or a sufficient change is detected in an element (typically an element that has already been identified).

Alphanumeric text is also relatively computationally expensive, and a similar strategy to image type elements may be adopted, for example detecting once every one or few seconds (for example a period slightly smaller than a typical reading time for a sentence of the length anticipated within the predetermined region of the alphanumeric text), and/or as noted elsewhere herein conditionally, based on whether a change, or a sufficient change is detected within the predetermined region, either indicating when text appears, or when text changes.

Numeric text can be slightly easier to detect than alphanumeric text, and also typically follows more predictable rules. For example where the numbers indicate a distance travelled, it may be unnecessary to regularly re-detect high number placement digits until the indicated amount suggests that these digits will change. Hence for example if the current distance in a race is 1050m, then optionally there is no need to re-detect the first '105' until the final character is detected as a nine and then a zero, and similarly the leading '1' does not need to be re-detected until the other three characters are 9 9 9 and then all zero. Optionally such numbers may be re-evaluated at a relatively low periodicity anyway just to correct any possible error or identify discrepancy.

Such numbers can also be evaluated at different periodicities according to the saliency or significance of the number; for example if the numbers a countdown timer, then the last few seconds are likely to be important and so the frequency with which the numbers are evaluated may increase up to and including the frame rate. Similarly, round numbers such as 10, 100, or 1000 are likely to be considered more significant to the user than other numbers and so as a numerical character set approaches such a round number or other significant number identified within the configuration file, the periodicity of recognition may increase.

Finally, HUD elements can be re-evaluated in response to the detection of an event; for example if an HUD element disappears, or an invalid result is generated for it, then are the HUD elements can be evaluated to determine whether for example the game has changed state with an associated large-scale wholesale change or removal of HUD elements. Similarly where there is a cross validation between HUD elements, a change one element that is for example evaluated in high frequency such as a bar type element may trigger the re-evaluation of a correlating element such as a numerical character element that may otherwise be evaluated at a lower frequency.

Hence more generally HUD elements may be identified at a common periodicity, or at a periodicity that is dependent upon one or more of the following factors: the likelihood of change, the computational expense of performing identification, the detection of an event likely to cause change, and a rule relating to a value (e.g. based on counting or saliency).

### Dynamic HUD elements

The above description assumes that the HUD elements are static, or at least that the regions that they occupy are static, even if the HUD elements themselves move position or extent by virtue of changing value (for example in the case of centrally justified text, or the extent of a health bar).

This allows for the predetermined regions to be defined in a configuration file as described elsewhere herein.

However, in a number of games one or more HUD elements are dynamic, meaning they move within the video game environment. This may simply mean they shake up and down as part of a virtual head-bob or other first person viewpoint motion (e.g. to signify an earthquake or other environmental event), or it may mean that they are more closely integrated with the virtual environment; for example a bullet count or weapon charge may be integrated into the users in-game weapon, or a player or non-player character's stats may be positionally associated with that character with for example a health bar above their head or in a circle around their feet.

As noted previously, in the case of a static HUD element, typically the image analysis system looks for one or more HUD elements at fixed locations on screen that are identified by the configuration file. This file identifies a region and typically a start point for each HUD element.

Meanwhile in the case of a dynamic HUD element the image analysis system uses a two-step approach; first it looks for an anchor point; this in effect corresponds to a start point for a region comprising a HUD element; the image analysis system then looks for the HUD element in a manner similar to that described previously herein. As such the anchor point is similar to the predetermined location for a static HUD element.

The number of anchor points required may depend upon the nature of the dynamic movement.

For example, where the entire HUD moves in response to a notional movement of the virtual camera providing a first person perspective on the virtual environment (and hence multiple HUD elements move in the same way), then the anchor point may relate to a HUD element that is particularly easy to identify (either in terms of computational cost and/or disambiguity relative to the general game environment), and typically more reliably present than other HUD elements; an example may be a health bar, which will typically be a predictable shape, colour, and brightness compared to the background, and is more likely to be present than other elements such as for example an armour bar, which may fully deplete during normal play; at least a first part of the health bar can be detected in a similar manner to an image type element or a temporary/conditional element as described elsewhere herein; the pixel pattern of the start of the health bar (e.g. a green region with a white border on at least on three sides, assuming that the health bar is partially truncated) can be searched for within an expanded region that encompasses the variable position of the health bar when moving due to the head bob or other effect. The search can be based on a template match between the HUD element and positions on the image, or a cross correlation between the HUD element and the region of the image, or any preferably efficient method of searching for a graphical element within a wider image.

Once the corresponding part of the health bar has been identified, then this acts as the anchor point or reference point for the health bar and also the other HUD elements, which have a fixed relationship to the health bar but have been similarly offset by the modified viewpoint.

Once the anchor point has been determined, the various HUD elements can be identified in an appropriate manner as described elsewhere herein.

In this case, the configuration file may provide the information to assist with the search for the anchor point, such as the pixel pattern of the start of the health bar, and the expanded region in which to search for it. The configuration file may then also provide the positions of the other HUD elements relative to this anchor point.

It will be appreciated that the use of positions relative to an anchor point may also be used for static HUD elements to simplify or unify the representation and processing within the image analysis system, but in this case the anchor point is predetermined. Similarly in a case where the HUD elements are static for a large proportion of the time but occasionally dynamic (e.g. in the case of occasional event drive camera shakes), then the system can assume a predetermined position but if any HUD element such as the health bar becomes unreadable (e.g. because it moved out of the expected position), then the image analysis system switches to a dynamic HUD strategy and actively searches for the anchor point.

As noted above, HUD elements may also move independently of each other, for example when they are associated with in game elements such as the user's avatar's weapon, or non-player characters.

In this case, each HUD element (or subset of HUD elements, where these move together) may have their own anchor point with respective HUD element(s) to search for. Again the configuration file can provide a region in which to look for the HUD.

Hence referring again to Figure 2, supposing that HUD section 230 (a bos health bar)was dynamic, following the BOSS around the screen. In this case then the HUD element to search for would be a red line surrounded by a white border (i.e. resembling a part of the HUD most likely to be visible), in a region near the depicted left-hand end of the boss health bar.

The configuration file may provide a (comparatively larger) region in which the dynamic HUD element is found. Optionally the configuration file may provide an indication of the relative probability of where the dynamic HUD element is found, based on movement patterns or an observed 'heat map', so that the system can prioritise its search in the most efficient manner.

Once the HUD element is found and used as an anchor point for the element and any associated elements identified by the configuration file (for example in this case the boss's name), it can be tracked in subsequent frames based upon where it was in the preceding frame and optionally a motion vector (i.e. a short term tracking of the direction of motion of the HUD element) to predict its position in the current frame. The search for the HUD element can then start from or be centred upon this predicted position.

Hence more generally dynamic HUDs are searched for within the image with reference to a representative HUD element, optionally with in a region provided by the configuration file and/or predicted from previous image frames. Once found, the position of the HUD element can act as an anchor for any HUD that is stationary relative to that dynamic HUD (i.e. all move in the same way).

### Post-Processing

Whether static or dynamic, once detected the HUD elements can be analysed as described previously herein and data can be extracted.

As noted previously, data can include numerical values corresponding to various on-screen statuses such as health bars and the like, so that the system can record the players health (and/or any other such value, such as stamina, mana/power, armour, weapon charge, wealth, etc. as appropriate).

Data can also include identification of transient elements such as equipped inventory items, and enemies or other non-player characters that the user encounters, whether identified by text or only pictorially - as well as optionally any on-screen statuses associated with these.

This data can be sanitised to account for any reading errors; for example character names can be compared to a glossary to confirm they have been read correctly, and it can be assumed that the name will be consistent from one frame to the next so that any spelling errors can be corrected (meanwhile a complete change of written content can be detected as a change of a threshold magnitude).

More generally for transient elements a degree of continuity can be assumed such that any detected changes below a threshold amount can be treated as an error, and the most recent stable identification can be used.

Meanwhile (particularly for dynamic HUDs) if the HUD element cannot be found within the time available (typically per frame), then yet again a degree of continuity can be assumed and the most recent stable identification can be used. In this case, if the HUD cannot be found after N frames, where Ni is a predetermined number, it may be assumed that the HUD element has disappeared, and optionally the information may be updated to indicate its prior disappearance at the first of the N frames.

### Analysis

The data obtained from the above analyses can be used to derive significant information about the game, the game play, and/or the user separate to any telemetry, if any, sent by the game itself.

### Examples include:

A particularly effective hit on an enemy; a large drop in enemy health suggests a critical hit or particularly accurate hit; timestamps for video footage of a boss battle could be associated with numbers indicating hit values (deltas from the health bar values of the boss), and the top N hit values could be used to create a summary / highlight video of the user's best attacks on the boss.

When the player is close to death in-game; when the player's health bar reaches a threshold value as determined by the techniques herein, video footage of the game could be marked; the video could then either be saved (or marked for saving) and continue until the health bar reaches zero, or the health bar jumps by a threshold amount (e.g. due to a last-minute heath pack). Meanwhile if neither of these events haven within a predetermined time (for example because the player ran away from a threat and then survived on low health for a period) then the video footage could be unmarked, or the mark nullified in some other manner (e.g. could a counter-mark). In this way, summary / highlight video of player deaths and/or close shaves could be created.

More generally, any threshold level of a measurably user statistic, or a threshold change therein, could be used to trigger the candidate recording of video footage of the game (or where that recording is automatic, for example on a circular buffer, marking the relevant part of the recording as candidate footage). Hence in addition to near death experiences, their character levelling up or winning a jackpot may be automatically recorded or marked for retention.

It will be appreciated that where there is speculative recording on a circular buffer or similar, the recording can be acausal - that is to say, if for example a keyword or phrase is detected, such as '1st Place', then video for the preceding N seconds can be marked for recording as it likely shows the player winning a race. Similarly when a boss' name is detected, then video for the preceding N seconds can be marked for recording as typically the boss will make a dramatic appearance before being named on-screen. In these examples, it will be appreciated that the value N may be different for different games or in-game events, and may be defined for example in the config file.

Such clips can then be compiled into a highlight reel for the user to upload or share, and/or used by the game as a recap / aide memoire for the user to reorient themselves with the plot the next time they play; in this case, the clips within the reel may be ranked by significance (for example according to a scheme in the config file) so that the highlight reel is a filtered version of the clips, the filtering being based on how long it has been since the user last played the game (e.g. show only most significant clips if playing again next day, more clips if next week, all clips if next month).

However, analysis need not be limited to the selection of video clips.

For example, the analysis may relate to the user's style of play, for example using a lot of spells that deplete the in-game magic resource, or consistently equipping melee or sniper items. This information can be useful to the developer for balancing the game or allocating resources to making additional items, but may also be useful more generally for example to recommend to the player other games that suit their style (which in turn may optionally be determined at least in part from how many players use a similar play style in that game to the current user in this game).

Other analyses with be apparent to the skilled person. For example, detecting how often the player dies and hence what their general skill level is compared to a wider corpus of players, or similarly how long it takes to beat a boss, and/or how much health they lost in the process. Such information could be used to then offer system or in-game based accessibility features, or again to recommend such features or game with them (or with difficulty levels commensurate with those exhibited but he user).

It will be appreciated that whilst the above techniques have been described in the context of videogames, they are not limited to these; for example, a system could monitor a progress bar to identify when a system is experiencing some form of slow-down without the need for direct interaction with the relevant code, and hence detect issues regardless of the program currently in use. Similarly, for systems that relate to healthcare, manufacturing / plant control, and the like, where the system itself may be secured / hard-coded / legacy or in some other way not practical to interact with at a data level, then the techniques herein would enable a third party monitoring and analysis of their Uls for significant events, acting as sources of additional warnings / analysis, and/or a firm of black-box.

### Summary Embodiments

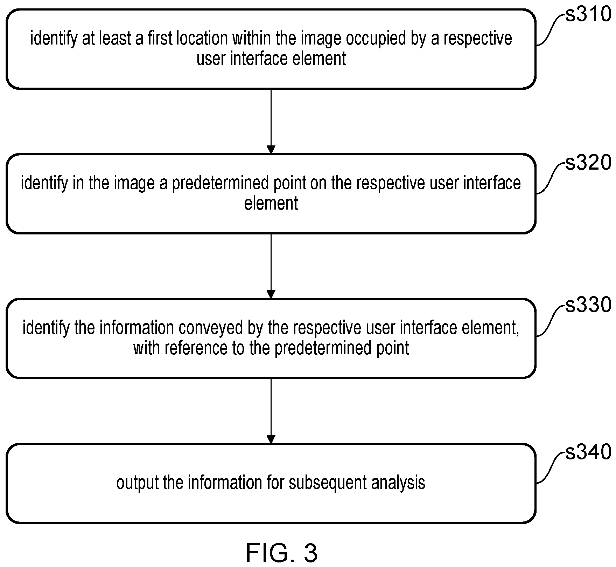

Turning now to Figure 3, in a summary embodiment of the present description, an image-based program state analysis method comprises the following steps.

For a given image generated by a program (such as the image in Figure 2), in a first step s310 identifying at least a first location within the image occupied by a respective user interface element (e.g. within a HUD), as described elsewhere herein - for example using information from the configuration file about where the user interface element is or is expected to be, either as a predetermined point or as a region, either static or defining a dynamic range of possible positions, and/or using image analysis within the image to identify the location(s).

In a second step s320, identifying in the image a predetermined point on the respective user interface element, as described elsewhere herein - for example an anchor point such as a the start point of a health bar, or an anchor point identifying where an image or text element will be located, for one or more user interface elements.

In a third step s330, identifying the information conveyed by the respective user interface element, with reference to the predetermined point, as described elsewhere herein - for example by estimating the extend of a health bar, matching an image to a reference, reading (alpha)numeric text, and the like.

And in a fourth step s340, outputting the information for subsequent analysis, as described elsewhere herein - for example to identify and optionally rank video clips for compilation into highlights or summaries for the user, or to provide trends in choices and performance of the user or over a corpus of users.

It will be apparent to a person skilled in the art that variations in the above method corresponding to operation of the various embodiments of the apparatus as described and claimed herein are considered within the scope of the present invention, including but not limited to that:
- the first location or a region comprising the first location is provided by a configuration file for the program, as described elsewhere herein;
- the predetermined point on the respective user interface element is static within images generated by the program, as described elsewhere herein;
- the predetermined point on the respective user interface element moves within images generated by the program, as described elsewhere herein;
- the step of identifying in the image a predetermined point on the respective user interface element comprises performing image analysis to identify an image element corresponding to at least a first part of the respective user interface element, and identifying in the image the corresponding location of the predetermined point on the respective user interface element based on the location of the image element, as described elsewhere herein;
   - in this instance, optionally the given image comprises a plurality of further user interface elements that move in the same way as a first respective user interface element, and the step of identifying a predetermined point on respective further user interface elements comprises identifying in the image a predetermined point on one or more of the further respective user interface elements as respective predetermined relative offsets to the identified location of the predetermined point on the first respective user interface element, as described elsewhere herein;
- a respective user interface element is a bar-type element, and the step of identifying the information comprises performing image analysis to detect how much of a maximum bar originating at the predetermined point is currently depicted within the image, and estimates a value for the property based on by how much is currently depicted, as described elsewhere herein;
- a respective user interface element is an image-type element, and the step of identifying the information comprises performing image analysis to identify an image element within a defined region relative to the predetermined point, by comparing a representation of the image type element within the defined region to a corresponding representation of a plurality of reference image elements, and obtaining an item definition associated with the best matching reference item, as described elsewhere herein;
- a respective user interface element is one or more numerical character elements, and the step of identifying the information comprises performing image analysis to identify one or more numerical character elements within a defined region relative to the predetermined point using optical character recognition, as described elsewhere herein;
- a respective user interface element is one or more alphanumeric character elements, and the step of identifying the information comprises performing image analysis to identify one or more alphanumeric character elements within a defined region relative to the predetermined point using optical character recognition, as described elsewhere herein;
   - in this instance, the step of performing image analysis comprises adopting a search strategy for the alphanumeric character elements responsive to the expected text justification within the defined region, as described elsewhere herein;
- the step of identifying the information does not comprise recognising text, as described elsewhere herein;
- the step of identifying the information conveyed by a respective user element is performed at a frequency responsive to the type of information, as described elsewhere herein; and
- which the subsequent analysis, based upon a given image or a sequence of such images, comprises one or more selected from the list consisting of identifying an event based upon a change in the identified information (e.g. damage taken by a boss, or points gained by the player), identifying an event based upon a threshold value associated with the identified information (e.g. health below a threshold), identifying a trend based upon the identified information (e.g. player style, preferences, and/or capabilities), and identifying a status based upon the identified information (e.g. race complete, or delayed operation progress), as described elsewhere herein.

It will be appreciated that the above methods may be carried out on conventional hardware suitably adapted as applicable by software instruction or by the inclusion or substitution of dedicated hardware.

Thus the required adaptation to existing parts of a device so as to configure it as at least part of an image-based program state analysis system may be implemented at least in part in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

Accordingly, in a summary embodiment of the present description, and referring again to Figure 1, an image-based program state analysis system (for example an entertainment system 10 such as the Sony ^{®} Playstation 5 ^{®}) comprises:
an image processor configured (for example by suitable software instruction), for a given image generated by a program (e.g. a game, healthcare or plant monitor, or other suitable program), to:
identify at least a first location within the image occupied by a respective user interface element;
identify in the image a predetermined point on the respective user interface element;
identify the information conveyed by the respective user interface element, with reference to the predetermined point; and
output the information for subsequent analysis.

Instances of this summary embodiment implementing the methods and techniques described herein (for example by use of suitable software instruction) are envisaged within the scope of the application, including but not limited to those listed in the preceding summary embodiment.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. An image-based program state analysis method, comprising the steps of:
for a given image generated by a program,
identifying at least a first location within the image occupied by a respective user interface element;
identifying in the image a predetermined point on the respective user interface element;
identifying the information conveyed by the respective user interface element, with reference to the predetermined point; and
outputting the information for subsequent analysis.

2. The method of any preceding claim in which the first location or a region comprising the first location is provided by a configuration file for the program.

3. The method of claim 1 or claim 2, in which the predetermined point on the respective user interface element moves within images generated by the program.

4. The method of claim 3, in which the step of identifying in the image a predetermined point on the respective user interface element comprises:
performing image analysis to identify an image element corresponding to at least a first part of the respective user interface element; and
identifying in the image the corresponding location of the predetermined point on the respective user interface element based on the location of the image element.

5. The method of claim 4, in which the given image comprises a plurality of further user interface elements that move in the same way as a first respective user interface element, and the step of identifying a predetermined point on respective further user interface elements comprises:
identifying in the image a predetermined point on one or more of the further respective user interface elements as respective predetermined relative offsets to the identified location of the predetermined point on the first respective user interface element.

6. The method of any preceding claim in which a respective user interface element is a bar-type element, and the step of identifying the information comprises:
performing image analysis to detect how much of a maximum bar originating at the predetermined point is currently depicted within the image; and
estimates a value for the property based on by how much is currently depicted.

7. The method of any preceding claim in which a respective user interface element is an image-type element, and the step of identifying the information comprises:
performing image analysis to identify an image element within a defined region relative to the predetermined point, by:
comparing a representation of the image type element within the defined region to a corresponding representation of a plurality of reference image elements; and
obtaining an item definition associated with the best matching reference item.

8. The method of any preceding claim in which a respective user interface element is one or more numerical character elements, and the step of identifying the information comprises:
performing image analysis to identify one or more numerical character elements within a defined region relative to the predetermined point using optical character recognition.

9. The method of any preceding claim in which a respective user interface element is one or more alphanumeric character elements, and the step of identifying the information comprises:
performing image analysis to identify one or more alphanumeric character elements within a defined region relative to the predetermined point using optical character recognition.

10. The method of claim 9, in which the step of performing image analysis comprises adopting a search strategy for the alphanumeric character elements responsive to the expected text justification within the defined region.

11. The method of any one of claims 1-7 in which the step of identifying the information does not comprise recognising text.

12. The method of any preceding claim, in which the step of identifying the information conveyed by a respective user element is performed at a frequency responsive to the type of information.

13. The method of any preceding claim, in which the subsequent analysis, based upon a given image or a sequence of such images, comprises one or more selected from the list consisting of:
i. identifying an event based upon a change in the identified information;
ii. identifying an event based upon a threshold value associated with the identified information;
iii. identifying a trend based upon the identified information; and
iv. identifying a status based upon the identified information.

14. A computer program comprising computer executable instructions adapted to cause a computer system to perform the method of any one of the preceding claims.

15. An image-based program state analysis system, comprising:
an image processor configured, for a given image generated by a program, to:
identify at least a first location within the image occupied by a respective user interface element;
identify in the image a predetermined point on the respective user interface element;
identify the information conveyed by the respective user interface element, with reference to the predetermined point; and
output the information for subsequent analysis.
